# EUROPÄISCHE PATENTSCHRIFT

(11) **EP 3 109 209 B1**
(45) Veröffentlichungstag und Bekanntmachung des Hinweises auf die Patenterteilung: **12.08.2020**
(21) Anmeldenummer: 16175235.7
(22) Anmeldetag: 20.06.2016
(51) Int. Cl.: C03C 8/02, C03C 8/04, C03C 8/14, C03C 17/04, C23D 5/06, C09D 11/037

(54) **VERFAHREN ZUR HERSTELLUNG EINES SUBSTRATES MIT EINER TEXTURIERTEN BESCHICHTUNG AUF GLASBASIS UND BESCHICHTETES SUBSTRAT**
METHOD OF MANUFACTURING SUBSTRATE HAVING TEXTURED COATING ON GLASS BASIS AND COATED SUBSTRATE
PROCÉDÉ DE FABRICATION D'UN SUBSTRAT AVEC UN REVÊTEMENT TEXTURÉ À BASE DE VERRE ET SUBSTRAT REVÊTU

(30) Priorität: 24.06.2015 DE 102015110121
(43) Veröffentlichungstag der Anmeldung: 28.12.2016
(73) Patentinhaber: Schott Orim Cam Sanayi ve Ticaret A.S, 59500 Çerkezköy (TR); Schott AG, 55122 Mainz (DE)
(72) Erfinder: Karagöz, Hüda, Corlu/ Tekirdag (TR); Mangold, Stephanie, 55130 Mainz (DE); Schwabe, Carsten, 56412 Horbach (DE); Knoche, Silke, 55291 Saulheim (DE)
(74) Vertreter: Witte, Weller & Partner Patentanwälte mbB

(56) Entgegenhaltungen:
- DE-A1- 2 010 831
- FR-A1- 2 999 171
- US-A1- 2010 156 290
- Anonymous: "Introduction to IR-Reflective Pigments", PCI, 1 August 2005 (2005-08-01), XP055551841, Retrieved from the Internet: URL:https://www.pcimag.com/articles/83468- introduction-to-ir-reflective-pigments [retrieved on 2019-02-05]

## Beschreibung

Die Erfindung betrifft ein Verfahren zur Herstellung eines Substrates mit einer texturierten Beschichtung auf Glasbasis, sowie ein beschichtetes Substrat. Unter einer texturierten Beschichtung wird im Rahmen dieser Anmeldung eine Beschichtung mit einer Textur verstanden, d.h. die Beschichtung ist nicht homogen, sondern weist eine irgendwie geartete Textur auf, also mindestens eine richtungsabhängige Eigenschaft. Bevorzugt handelt es sich hierbei um eine optisch wahrnehmbare Ausrichtung, wozu auch ein visueller 3D-Effekt gehört. Die Oberfläche der Beschichtung kann bevorzugt glatt sein, so dass die Textur an der Oberfläche der Beschichtung nicht plastisch ausgeprägt ist.

Es ist bekannt, dass anorganische, glasbasierte Beschichtungen den Oberflächen von Glas und Glaskeramiken besondere Eigenschaften verleihen.

Der Glasanteil der Beschichtung verleiht der Beschichtung besondere chemische und physikalische Eigenschaften. Dies sind z.B. chemische Beständigkeit, Abrieb- und Kratzfestigkeit sowie thermische Beständigkeit. Gegenüber Beschichtungen mit organischer Matrix zeichnen sich die anorganischen Beschichtungen durch höheren Glanz und höhere Beständigkeit gegenüber UV-Bestrahlung aus. Die Zugabe von farbgebenden Pigmenten oder Mattierungszusätzen gestattet es, die beschichteten Artikel hinsichtlich Ästhetik und Design zu gestalten und zu differenzieren. Flächige Beschichtungen dienen oft dem Schutz der Abdeckung oder zur Erzielung eines gewünschten Aussehens, wie zum Beispiel vollflächige Beschichtungen als Bedienblenden für Backöfen, als Rahmen von Kaminscheiben, Vorsatzscheiben für Backöfen. Dekorationen werden eingesetzt für Beschriftungen, Logos, zur Erzielung eines gewünschten Designs oder auch zur Unterstützung bestimmter technischer Funktionen etwa im Fall von Displayfenstern oder der Markierung von Kochzonen. Kochflächen aus Glaskeramik werden auf ihrer Oberfläche farbig gestaltet, teils aus ästhetischen Gründen, teils zur Differenzierung der Gerätehersteller, sowie aufgrund bestimmter gesetzlicher Vorgaben, die eine Kennzeichnung von Kochzonen fordern. Wegen der hohen Temperaturen auf der Kochfläche, insbesondere in den Kochzonen, von bis zu etwa 700°C, je nach Beheizungssystem und Kochsituation, sowie den geforderten Gebrauchseigenschaften, werden für die farbliche Gestaltung fast ausschließlich glasbasierte Beschichtungen eingesetzt.

Glasbasierte Beschichtungen werden im Allgemeinen in die Kategorie Glasuren bzw. Emails (auch als Emaille bezeichnet) eingeteilt. Die Glasuren bestehen in der Regel aus einem klaren oder eingefärbten Glas, während Emails Überzugsmassen sind, die färbende, nicht transparente Materialien, wie Pigmente enthalten. Als Pigmente können farbige, anorganische Verbindungen verwendet werden. Der Beschichtungsvorgang selbst wird meist als Glasieren, Emaillieren, Dekorieren oder Bedrucken bezeichnet.

Glasbasierte Beschichtungen sind auch seit langer Zeit bei der Beschichtung von Metallen und Keramiken im Einsatz. Bei diesen Beschichtungen ist es möglich, und es wird angestrebt, die thermischen Ausdehnungskoeffizienten von Beschichtung und Trägermaterial gut anzupassen. Dadurch sind größere Schichtdicken möglich, die die Schutzwirkung und die Gestaltungsmöglichkeiten verbessern.

Für die Beschichtung von Glas und Glaskeramiken sind technisch ausgereifte Verfahren und Anlagen im Gebrauch. Es dominieren Beschichtungsverfahren, bei denen ein flüssiges bzw. pastenartiges Beschichtungsmaterial aufgebracht wird. Diese Paste oder Tinte kann mittels verschiedener Verfahren, beispielsweise mittels Siebdruck, Tampondruck, Abziehbildverfahren, Offset-Druck, Rollenbeschichtung, Rakeln, Fluten, Spin-Coating, oder auch über Tauch- und Sprühverfahren, sowie neuerdings auch durch Tintenstrahlen, auf die Oberfläche des Substrats appliziert werden.

Die Paste besteht üblicherweise aus dem gemahlenen Glaspulver (auch als Glasfritte bezeichnet), den in der Regel zugesetzten Pigmenten, optional weiteren anorganischen Zusatzstoffen und einem Flussmittel (insbesondere Siebdrucköl), und ggf. weiteren organischen Hilfsstoffen die sich beim Einbrennen und Glattfließen der Beschichtung vollständig verflüchtigen.

Wegen der besonderen Anforderungen, die an glasbasierte Beschichtungen von Glas und Glaskeramiken gestellt werden, werden die Komponenten des Glases meist vorher vollständig aufgeschmolzen und zu einer Glasfritte geeigneter Körnung gemahlen.

Um bestimmte Strukturen, insbesondere 3D-Strukturen, also zumindest teilweise plastische Strukturen, auf einer Oberfläche eines Substrates zu erzeugen, kann insbesondere ein Auftrag mittels verschiedener Druckverfahren erfolgen, wobei durch einen Mehrfachauftrag auch eine gewisse plastische Struktur erreicht werden könnte. Problematisch ist allerdings, dass beim Einbrennen die Strukturen ggf. wieder verlaufen. Hinzu kommt, dass eine maximale Schichtdicke nicht überschritten werden darf, da dieses zum Abplatzen der eingebrannten Beschichtung führt. Außerdem ist ein solches Verfahren im Falle eines Mehrfachauftrags sehr aufwändig.

Aus der FR 2 999 171 A1 ist ein Verfahren zum Herstellen einer Schutzschicht bekannt, die wenigstens eine Emaille-Schicht umfasst, auf einem Substrat aus Glas- oder Glaskeramik bekannt, wobei eine Paste aus einer Silikatglas-Fritte hergestellt wird, der ferromagnetische Pigmente auf der Basis von Eisenoxiden und ein Flussmittel beigemischt werden, derart, dass die Paste einen Feststoffanteil von bis zu 10 Gew.-% an ferromagnetischen Pigmenten aufweist, die Paste dann auf eine Oberfläche des Substrates appliziert wird, mittels eines Magnetfeldes ausgerichtet und dann eingebrannt wird. Das Verfahren dient insbesondere zur Beschichtung von Kochgeschirr.

Aus der US 2010/0156290 A1 ist ein Verfahren zur Beschichtung eines Glassubstrates bekannt, bei dem eine Paste aus einer Glasfritte, der ferromagnetische Pigmente auf der Basis von Ferriten und ein Flussmittel beigemischt werden, derart, dass die Paste einen Feststoffanteil von bis zu 20 Gew.-% an ferromagnetischen Pigmenten aufweist, die Paste auf die Oberfläche eines Glassubstrates appliziert wird, mittels eines Magnetfeldes asugerichtet und dann eingebrannt wird. Das Verfahren dient zur Herstellung von Elektroden bei Plasma-Displays.

Aus der DE 2 010 831 A1 ist ein Verfahren zur Beschichtung eines Glassubstrates bekannt, bei dem eine Emaille-Mischung in Breiform hergestellt wird, der ferromagnetische Pigmente zugemischt werden, derart, dass die Mischung einen Feststoffanteil von bis zu 20 Gew.-% an ferromagnetischen Pigmenten aufweist, die Mischung auf eine Oberfläche eines Substrates appliziert wird, die Mischung mittels eines Magnetfeldes ausgerichtet wird und anschließend geschmolzen und ausgehärtet wird.

Vor diesem Hintergrund liegt der Erfindung die Aufgabe zu Grunde, ein kostengünstiges Verfahren zur Erzeugung von texturierten Beschichtungen auf Glasbasis auf der Oberfläche eines Substrates anzugeben, sowie ein beschichtetes Substrat mit einer texturierten Oberfläche, wobei die Erzeugung eines 3D-Effektes ermöglicht werden soll, der von einer der Beschichtung abgewandten Seite des Substrates her sichtbar ist.

Diese Aufgabe wird durch ein Verfahren gemäß Anspruch 1 gelöst.

Durch die Ausrichtung der ferromagnetischen Pigmente in der Paste mit Hilfe eines Magnetfeldes lassen sich auf einfache Weise Strukturen mit einer Textur, insbesondere auch optisch sichtbare 3D-Effekte, sowie plastische oder 3D-Strukturen, mittels der magnetischen Feldlinien erzeugen. Durch das magnetische Feld richten sich die ferromagnetischen Pigmente entlang der Feldlinien aus und erzeugen so einen anderen optischen Eindruck als der unbehandelte Bereich. Nach Abschalten des Magnetfeldes verbleiben die Pigmente in der Ausrichtung und bleiben beim nachfolgenden Einbrand im Wesentlichen in dieser Ausrichtung erhalten, so dass sich eine Textur ergibt. Es kann ein 3D-Effekt erzeugt werden, der von der Glasseite her gut sichtbar ist, wobei die Beschichtung an ihrer Oberfläche keine oder nur eine geringe plastische Ausprägung haben kann. Ein optisch sichtbarer 3D-Effekt kann hierbei über helle und dunkle Bereiche in Folge der Ausrichtung der ferromagnetischen Pigmente erreicht werden.

Erfindungsgemäß wird bei der Vorbereitung der Paste die Viskosität, die im Wesentlichen durch das in Form von Flüssigkeit zugesetzte Flussmittel (etwa Siebdrucköl) bedingt ist, in bestimmter Weise eingestellt. Die Viskosität muss einerseits niedrig genug sein, so dass sich die ferromagnetischen Pigmente unter der Kraft magnetischer Felder ausrichten können, andererseits muss die Viskosität bzw. Thixotropie auch hoch genug sein, um die plastische Struktur der Paste zu bewahren und ein Verfließen der Struktur bei den folgenden Prozessschritten, insbesondere beim Einbrennen, zu verhindern.

Damit sich die Pigmente ausrichten können, muss die Viskosität der Paste darauf angepasst sein. Die Viskosität liegt erfindungsgemäß im Bereich von 10 bis 1000 cP, bevorzugt im Bereich von 50 bis 800 cP. Besonders gute Ergebnisse werden mit einer Viskosität im Bereich von 100 bis 600 cP erzielt.

Je nach den zum Ausrichten verwendeten Magneten lässt sich die Textur der Beschichtung beeinflussen. Besonders mittels Elektromagneten lässt die Ausrichtung der Textur in sehr weitem Maße beeinflussen bzw. variieren.

So können beispielsweise mit speziellen Formen der Magneten verschiedene Muster wie Ringe, Logos, Schriftzeichen erzeugt werden. Ebenso können durch programmierbare Magneten verschiedenste Zeichen kreiert werden.

Die Einwirkzeit des Magneten kann von einem Bruchteil einer Sekunde bis zu mehreren Minuten betragen. Besonders bevorzugt ist eine Einwirkzeit von 0,5 - 5 Sekunden.

Der Abstand des Magneten ist abhängig von der Einwirkseite (Einwirkung von der Unterseite - gegenüberliegend zur Beschichtung, Einwirkung von der Oberseite), der Substratdicke und der jeweiligen Farbanpastung und kann von einem Fachmann individuell ermittelt werden. Der Abstand auf der gegenüberliegenden Seite der Schicht kann von 0 mm (direktes Anliegen am Substrat) bis zu 10 mm betragen. Der Abstand von der Oberseite sollte zum Schutz vor Verschmutzung des Magneten zwischen 1 - 15 mm betragen.

Als besonders geeignet haben sich die ferromagnetische Pigmente aus den Colour-Index-Gruppen Black 26 und Black 30 erwiesen.

Überraschenderweise zeigte sich, dass nicht alle eisenhaltigen Pigmente ferromagnetisch sind. So können Pigmente, die die gleichen Metalloxide enthalten,(z.B. Eisen-Mangan-Oxide) beispielsweise durch verschiedene Kristallstrukturen ferromagnetisch oder nicht ferromagnetisch sein. So wurde festgestellt, dass Pigmente auf (Fe,Mn)(FeMn)₂O₄-Basis ferromagnetisch waren, während ein Pigment auf (Mn, Fe)₂O₃-Basis nicht ferromagnetisch war. Beispiele für C.I. Gruppen, die keine Ferromagnetismus aufwiesen, waren Black 33 und Brown 29.

Wie auf der Homepage der SDC (Society of Dyers and Colorists) und der American Association of Textile Chemists and Colorists beschrieben, dient der Colour Index (kurz C.I.) zur Charakterisierung aller gebräuchlichen Farbmittel und Farbstoffbasis-Chemikalien. Der C.I. ist ein seit 1925 existierendes Nachschlagewerk aller gebräuchlichen Farbmittel und Farbstoffbasis-Chemikalien und gilt als Standardwerk auf dem Gebiet der Pigment- und Farbstoffchemie, das von der British Society of Dyers and Colourists und American Association of Textile Chemists and Colorists herausgegeben wird. Der Colour Index wird markennamenübergreifend in der Pigment- und Farbstoffindustrie genutzt, speziell ist der C.l.-Name die übliche Bezeichnungsweise zur Charakterisierung.

Der Paste können gemäß einer weiteren Ausführung der Erfindung ferner farbgebende Pigmente, Füllstoffe und/oder strukturgebende Partikel beigemischt werden.

Hierdurch lassen sich insbesondere die Farbe der Beschichtung sowie weitere Eigenschaften der Beschichtung beeinflussen.

Gemäß einer weiteren Ausführung der Erfindung werden der Paste farbgebende Pigmente in Form von Metalloxiden zugesetzt, die insbesondere schwarze, graue, weiße, blaue, grüne, gelbe, orange, rote, pinkfarbene als auch braune Farben erzeugen können.

Die Metalloxide können aus der Gruppe ausgewählt werden, die aus Cobalt-Oxiden/-Spinellen, Cobalt-Aluminium-Spinellen, Cobalt-Aluminium-Zink-Oxiden, Cobalt-Aluminium-Silizium-Oxiden, Cobalt-Titan-Spinellen, Cobalt-Chrom-Spinellen, Cobalt-Aluminium-Chrom-Oxiden, Cobalt-Nickel-Mangan-Eisen-Chrom-Oxiden/-Spinellen, Cobalt-Nickel-Zink-Titan-Aluminium-Oxiden/-Spinellen, Chrom-Eisen-Nickel-Mangan-Oxiden/-Spinellen, Cobalt-Eisen-Chrom-Oxiden/-Spinellen, Nickel-Eisen-Chrom-Oxiden/- Spinellen, Eisen-Mangan-Oxiden/-Spinellen, Eisen-Oxiden, Eisen-Chrom-Oxiden, Eisen-Chrom-Zinn-Titan-Oxiden, Kupfer-Chrom-Spinellen, Nickel-Chrom-Antimon-Titan-Oxiden, Titan-Oxiden und Zirkon-Silizium-Eisen-Oxiden/-Spinellen, sowie Mischungen hiervon besteht.

Bevorzugt werden ferner Pigmente in Form von Absorptionspigmenten, insbesondere auch plättchen- oder stäbchenförmige Pigmente, beschichtete Effektpigmente, verwendet, die als Einzelpigmente oder auch als Pigmentmischung der Paste zugesetzt werden können.

Ferner können verschiedene Füllstoffe zugesetzt werden, die vorzugsweise aus der Gruppe ausgewählt werden, die aus der Gruppe ausgewählt werden, die aus SiOx-Partikeln, Aluminiumoxid-Partikeln, pyrogenen Kieselsäuren, Kalk-Natron-, Alkali-Alumosilikat- und Borosilikatglaskugeln, Glashohlkugeln, Polysiloxankugeln und/oder Mischungen davon besteht.

Als Glasfritte werden vorzugsweise folgende Glasarten verwendet: alkalifreie und alkalihaltige Gläser, Silikatgläser, Borosilikatgläser, Zinksilikatgläser, Zinkboratgläser, Zinkborosilikatgläser, Bismutborosilikatgläser, Bismutboratgläser, Bismutsilikatgläser, Phosphatgläser, Zinkphosphatgläser, Alumosilikatgläser oder Lithium-Alumosilikatgläser. Je nach Einbrandbedingung und Trägermaterial (Substrat) wird der Fachmann ein geeignetes Glasurglas auswählen, insbesondere dahingehend, dass bei angepasster Glasur-Schichtdicke ein An- bzw. Aufschmelzen der Paste gewährleistet ist. Die Glasfritte ist bevorzugt frei von Elementen wie Pb und Cd.

Das bedeutet, dass die Erweichungstemperatur Ew der Glasfritte unterhalb der Einbrandtemperatur liegt. Die Zeitdauer des Einbrandes kann je nach verwendetem Temperaturprogramm zwischen wenigen Minuten und mehreren Stunden liegen.

Insbesondere erfolgt das Einbrennen in Kombination und bevorzugt während eines thermischen Vorspannens eines Flachglassubstrates. Hierbei liegen die Maximalwerte der Temperatur zwischen 680 °C und 720 °C. Danach erfolgt aktives Abkühlen.

Bevorzugte Zusammensetzungen von Glasfritten für Beschichtungen auf Glaskeramiksubstraten und Glassubstraten sind nachfolgend in den Tab. 1 und 2 zusammengefasst.

**Tab. 1: Bevorzugte Glasfrittenzusammensetzungen für Beschichtungen auf Glaskeramiksubstraten**

| **Gew.-%** | **Glas A** | **Glas B** | **Glas C** | **Glas D** | **Glas E** | **Glas F** | **Glas G** | **Glas H** | **Glas I** |
|---|---|---|---|---|---|---|---|---|---|
| **SiO₂** | 44-57 | 53-63 | 57-62 | 47-52 | 40-50 | 63-73 | 50-66 | 45-60 | 45-75 |
| **Al₂O₃** | 5-25 | 15-25 | 5-8 | 2-6 | 9-15 | 0-7 | 0-20 | 6-17 | 1-10 |
| **B₂O₃** | 0-27 | 15-22 | 18-23 | 17-21 | 10-15 | 12-29 | 0-8 | 0-10 | 10-30 |
| **Li₂O** | 0-10 | 2-7 | 2-6 | 3-5 | 0-4 | 0-6 | 0-12 | 0-7 | 0-5 |
| **Na₂O** | 0-10 | 0-1 | 0-1 | 1-5 | 1-4 | 0-8 | 7-15 | 0-7 | 0-10 |
| **K₂O** | 0-10 | 0-1 | 0-4 | 5-10 | 0-3 | 0-8 | 0-3 | 0-7 | 0-5 |
| **CaO** | 0-4 | 1-4 | 1-2 | 0-2 | 0-3 | 0-5 | 0-10 | 0-12 | 0-4 |
| **MgO** | 0-3 | 1-4 | 0-2 | 0-1 | 0-3 | 0,1-5 | 3-8 | 0-9 | 0-4 |
| **BaO** | 0-4 | 0-1 | 0-2 | 0-2 | 16-24 | 0-5 | 0-15 | 13-27 | 1-10 |
| **SrO** | 0-4 | 1-4 | 0,5-2 | 0-1 | 0-2 | 0-4 | 0-4 | 0-4 | 0-4 |
| **ZnO** | 0-15 | 1-4 | 0-2 | 0-3 | 8-15 | 0-15 | 0-5 | 3-17 | 0-20 |
| **TiO₂** | 0-3 | 0-1 | 0-2 | 0-2 | 0-3 | 0-5 | 0-5 | 0-2 | 0-2 |
| **ZrO₂** | 0-7 | 1-4 | 2-5 | 0-2 | 0-4 | 0-5 | 0-5 | 0-7 | 0-7 |
| **As₂O₃** | 0-1 | 0-1 | 0-1 | 0-1 | 0-1 | 0-1 | 0-1 | 0-1 | 0-1 |
| **Sb₂O₃** | 0-15 | 0-1 | 0-1 | 0-1 | 0-15 | 0-1 | 0-1 | 0-1 | 0-1 |
| **F** | 0-3 | 0-1 | 0-1 | 0-1 | 0-1 | 0-1 | 0-1 | 0-1 | 0-2 |

**Tab. 2: Bevorzugte Glasfrittenzusammensetzungen für Beschichtungen auf Glassubstraten**

| **Gew.-%** | **Glas K** | **Glas L** | **Glas M** | **Glas N** | **Glas O** | **Glas P** |
|---|---|---|---|---|---|---|
| **SiO₂** | 25-55 | 35-65 | 30-54 | 6-20 | 6-15 | 45-65 |
| **Al₂O₃** | 3-18 | - | 0-17,5 | 0-5 | - | 0-15 |
| **B₂O₃** | 5-25 | - | 13-28 | 20-38 | 20-28 | 5-30 |
| **Li₂O** | 0-12 | 0-6 | 3-6 | - | - | 0-10 |
| **Na₂O** | 3-18 | 0-6 | 4-10 | - | - | 0-10 |
| **K₂O** | 3-18 | 0-6 | 0-2 | - | - | 0-10 |
| **CaO** | 3-17 | 0-12 | 0-6 | - | - | 0-5 |
| **MgO** | 0-10 | 0-12 | 0-4 | - | - | 0-5 |
| **BaO** | 0-12 | 0-38 | - | - | - | 0-20 |
| **SrO** | - | 0-16 | 0-4 | - | - | 0-16 |
| **ZnO** | - | 17,5-38 | 3-13 | 35-70 | 58-70 | 0-35 |
| **TiO₂** | 0-5 | - | 0-2 | 0-5 | - | 0-5 |
| **ZrO₂** | 0-3 | - | 0-2 | 0-5 | - | 0-5 |
| **Bi₂O₃** | - | - | - | 0-20 | - | 0-20 |
| **CoO** | - | - | - | 0-5 | - | - |
| **Fe₂O₃** | - | - | - | 0-5 | - | - |
| **MnO** | - | - | - | 0-10 | 0,5-1 | - |
| **CeO₂** | - | - | - | - | 0-3 | - |
| **F** | - | - | 0-3,3 | 0-6 | - | - |

Der Paste können, wie bereits erwähnt, Pigmente, Pigmentmischungen, Füllstoffe und strukturgebende Partikel einzeln und/oder als Mischungen zugesetzt werden. Die Korngrößen der Pigmente, Füllstoffe, Partikel können im nm-Bereich und µm-Bereich liegen, bevorzugt mit einem D90-Wert zwischen 1 nm und 100 µm, besonders bevorzugt mit einem D90-Wert zwischen 10 nm und 50 µm, insbesondere bevorzugt mit D90-Werten zwischen 20 nm und 10 µm.

Die Korngrößen werden mittels eines Laserlichtstreuungsverfahrens bestimmt (CILAS 1064, Nassdispergierung).

In bevorzugter Ausführung weist die Paste einen Feststoffanteil auf, der mindestens 5 Gew.-% bis höchstens 60 Gew.-%, vorzugsweise zwischen 10 Gew.-% und 45 Gew.-%, besonders bevorzugt zwischen 15 und 35 Gew.-%. an ferromagnetischen Pigmenten aufweist.

Ein gewisser Mindestanteil ist erforderlich, um eine merkliche Ausrichtung der Paste durch ein angelegtes Magnetfeld zu erlauben. Andererseits darf der Anteil an ferromagnetischen Pigmenten nicht so hoch sein, dass ein sauberes Aufschmelzen (Glattschmelzen) der Beschichtung beim Einbrand beeinträchtigt wird.

Besonders gute Ergebnisse wurden mit einem Anteil an magnetischem Pigment von 15 bis 25 Gew.-% am Feststoffanteil der Paste erzielt.

Die Schichtdicken der eingebrannten keramischen Beschichtungen auf den Substraten können zwischen 0,5 und 50 µm, bevorzugt zwischen 1 und 20 µm, besonders bevorzugt zwischen 1 und 10 µm liegen. Die Beschichtungen können vollflächig oder auch lokal, als strukturierte Dekore wie Raster, Muster, Schriftzeichen, Symbole etc. vorliegen, als eine einzelne Schicht, oder es können auch mehrere Beschichtungen (Farben) nebeneinander angeordnet oder auch übereinander angeordnet sein.

Obwohl die Beschichtung grundsätzlich auch auf anderen Substraten, wie z.B. Metallen oder Keramiken, verwendet werden kann, ergeben sich besondere Vorteile, wenn als Substrat ein Glas- oder Glaskeramiksubstrat verwendet wird.

Ebenso können die Substrate aus Verbundmaterialien oder auch verstärkten bspw. faserverstärkten Materialien bestehen. Es werden bevorzugt Gläser und Glaskeramiken verwendet, die transparent, eingefärbt transparent, transluzent oder opak sein können. Die Gläser oder Glaskeramiken können mit Zusatzfunktionen versehen sein, beispielsweise chemisch oder thermisch gehärtet sein, funktionelle Beschichtungen, wie Anti-Kratz- oder Easy-to-clean-Eigenschaften aufweisen.

Soweit Glaskeramiken als Substrate verwendet werden, so können diese vorteilhaft im Grünglaszustand bereit gestellt werden und während des Einbrennvorgangs keramisiert werden (d.h. kristallisiert werden). Dies führt zu einer besonders einfachen und kostengünstigen Prozessführung.

Alternativ können natürlich auch Glaskeramiken im bereits keramisierten Zustand verwendet werden, die mit der Paste beschichtet und dann eingebrannt werden.

Das Substrat kann eine beliebige Form und Größe aufweisen. Es kann ein planes, ein zu biegendes oder bereits (partiell) gebogenes Substrat verwendet werden. Die bevorzugte Dicke der Substrate beträgt 0,02 - 100 mm, bevorzugt 2 - 6 mm, besonders bevorzugt 3,5 - 4,5 mm. Die Substrate können mechanisch bearbeitete oder auch geätzte Oberflächen, sowie lokale Vertiefungen und/oder Erhöhungen aufweisen. Das Substrat kann auch lokal verschiedene Dicken aufweisen. Bevorzugt werden Substrate verwendet, wie sie im Bereich der weißen Ware bzw. Haushaltsgeräte eingesetzt werden, beispielsweise für Back- und Gargeräte, Mikrowellen, Kühlschränke, Dampfgarer, Bedienblenden für derartige Geräte, Gaskochgeräte, Spülen oder Geschirrspülgeräte, Kochfelder, Ofenscheiben, Kaminsichtscheiben etc..

Ebenso können Beschichtungen (Farben) auf der Substratoberseite und/oder Unterseite angeordnet sein. Es können Beschichtungen auf keramischer, Sol-Gel-, Silikon-, Polymer- Basis etc., sowohl einzeln als auch in Kombination, verwendet werden.

Die Applizierung der Beschichtungen kann vorteilhafterweise über Flüssigbeschichtungsverfahren wie Siebdruck-, Inkjet-, Off-Set-Druck-, Tampondruck-, Sprühverfahren, Tauchbeschichtung, Rollenbeschichtung, Rakeln, Fluten, Spin-Coating erfolgen. Die notwendigen, meist organischen Hilfsmittel verflüchtigen sich beim Einbrennen der Beschichtung.

Gemäß einer weiteren Ausführung der Erfindung wird die Beschichtung als Siebdruckfarbe auf Sol-Gel-Basis hergestellt.

Gemäß einer weiteren Ausführung der Erfindung wird die Beschichtung nach ihrer Applizierung auf die Oberfläche des Substrates mittels des Magnetfeldes ausgerichtet und dann getrocknet wird, bevor das Einbrennen der Beschichtung erfolgt.

Hierdurch lässt sich eine bessere Fixierung der durch das Magnetfeld erzeugten Struktur gewährleisten.

Gemäß einer weiteren Ausführung der Erfindung wird die Beschichtung nach ihrer Applizierung auf die Oberfläche des Substrates mittels des Magnetfeldes ausgerichtet und gleichzeitig getrocknet, bevor das Einbrennen der Beschichtung erfolgt.

Durch eine gleichzeitige Trocknung lässt sich noch eine bessere Fixierung der Struktur gegen ein Verlaufen beim späteren Einbrennen gewährleisten.

Ein alternative Möglichkeit besteht darin, die Paste mit UV-härtenden Zusätzen zu versehen, die während oder nach der Ausrichtung der Beschichtung mittels des Magnetfeldes durch eine UV-Bestrahlung ausgehärtet werden.

Die Temperatur beim Einbrennen wird in geeigneter Weise angepasst, um beim Einbrennen ein Glattfließen der Paste zu erreichen. Auf jeden Fall liegt die Temperatur beim Einbrennen über der Erweichungstemperatur der Glasfritte.

Das Einbrennen der Paste erfolgt üblicherweise bei Temperaturen, die unterhalb des Erweichungsbereiches des Substrates liegen, aber ausreichend hoch sind, um ein glattes Aufschmelzen der Glasur und ein inniges Verbinden mit der Oberfläche des Substrates zu gewährleisten. Eine Möglichkeit der Herstellung von Glasuren besteht in dem Einschmelzen der Glasurrohstoffe zu einem Glas, das nach dem Erschmelzen und Abkühlen aufgemahlen wird. Das Mahlprodukt wird als Glasfritte bezeichnet. Eine solche Glasfritte wird üblicherweise mit geeigneten Hilfsstoffen, zum Beispiel Flussmitteln oder Suspendiermitteln, versetzt, die dem Auftragen der Paste dienen. Die farbgebenden Pigmente können als Glasurrohstoff zugegeben oder bevorzugt zu der gemahlenen Glasfritte beigemischt und zusammen homogenisiert werden.

Zum Mahlen der Glasfritte können verschiedene Trocken- und Nassmahltechnologien angewendet werden, bspw. Kugelmühlen, Strahlvermahlung, insbesondere Gegen-, Luft- oder Dampfstrahlvermahlung.

Die Aufgabe der Erfindung wird ferner durch ein Substrat mit einer eingebrannten Beschichtung aus einer Paste gelöst, die magnetisierte Pigmente enthält, die mittels eines Magnetfeldes strukturiert sind, vorzugsweise plastisch ausgerichtet sind.

Schließlich wird auch eine Verwendung von ferromagnetischen Pigmenten zur Herstellung einer Paste zur Beschichtung eines Substrates offenbart, die mittels eines Magnetfeldes derart ausrichtbar ist, dass die Ausrichtung bei einem nachfolgenden Einbrennen der Beschichtung im Wesentlichen erhalten bleibt.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus den nachfolgenden Ausführungsbeispielen.

### BEISPIELE

### Beispiel 1

Zur Herstellung einer schwarzen Paste mit einer Viskosität von 500 cP bei 140 U/min wurden 40 g einer aufgemahlenen Glasfritte (Glas N, Korngröße D90 < 4 µm) mit 10 g Schwarzpigment (Black 27) und mit 100 g kommerziell erhältlichen Siebdrucköls versetzt. Diese Paste wurde auf eine 4 mm dicke Scheibe aus Borofloat® (Marke der Firma Schott AG, Mainz) mit der Größe 200 mm x 200 mm per Siebdruck vollflächig aufgetragen. Ein Elektromagnet, der die Form eines Quadrates von 50 mm x 50 mm hatte, wurde nun an die unbeschichtete Seite des Glases gehalten, und das Pigment richtete sich in diesem Bereich aus. Anschließend wurde das beschichtete Substrat bei 200°C getrocknet und bei 650°C für 10 min eingebrannt.

Die Schichtdicke betrug 3,2 µm, die eingebrannte Paste war schwarz und im Bereich, der mit dem Magneten behandelt wurde, deutlich als graues Quadrat erkennbar.

### Beispiel 2

Zur Herstellung einer roten Paste mit einer Visikosität von 105 cP bei 140 U/min wurden 40 g einer aufgemahlenen Glasfritte (Glas A, Korngröße D90 < 4 µm) mit 10 g Rotpigment (Rot 101) und mit 100 g kommerziell erhältlichen Siebdrucköls versetzt. Diese Beschichtung wurde auf eine 4 mm dicke Scheibe aus glasigem CERAN Cleartrans® (Marke der Firma Schott AG, Mainz) mit der Größe 200 mm x 200 mm per Siebdruck vollflächig aufgetragen. Ein Dauermagnet, der die Form eines Kreises mit 50 mm Durchmesser hatte, wurde nun an die unbeschichtete Seite des Glases gehalten, und das Pigment richtete sich in diesem Bereich aus. Anschließend wurde das beschichtete Substrat bei 200°C getrocknet. Anschließend erfolgte der Einbrand der Paste gleichzeitig mit der Keramisierung des Substrates bei 900°C.

Die Schichtdicke betrug 2,6 µm, die eingebrannte Paste war rot und im Bereich, der mit dem Magneten behandelt wurde, deutlich als erhabener Kreis erkennbar.

### Beispiel 3

Zur Herstellung einer UV-vorgetrockneten schwarzen Paste mit einer Anfangs-Visikosität von 227 cP bei 140 U/min wurden 40 g einer aufgemahlenen Glasfritte (Glas A, Korngröße D90 < 4 µm) mit 20 g Schwarzpigment (Black 26) und mit 100 g eines Acrylat-haltigen Siebdrucköls (UV-Direktdruckmedium) versetzt. Diese Paste wurde auf eine 4 mm dicke Scheibe aus glasigem CERAN Cleartrans® (Marke der Firma Schott AG, Mainz) mit der Größe 200 x 200 mm2 mittels Siebdruck vollflächig aufgetragen. Ein Dauermagnet, der die Form eines Schriftzuges trug, wurde nun an die unbeschichtete Seite des Glases gehalten, was zur Ausrichtung der Beschichtung in diesem Bereich führte. Anschließend wurde das beschichtete Substrat mittels UV-Licht 10 Sekunden lang ausgehärtet. Die UV-getrocknete Beschichtung hatte eine Schichtdicke von 7,8 µm. Der Einbrand der Beschichtung erfolgte gleichzeitig mit der Keramisierung des Substrates bei 920°C in 15 min.

Die Schichtdicke betrug 3,1 µm, die eingebrannte Paste war schwarz und im Bereich, der mit dem Magneten behandelt wurde, deutlich der optisch hervorgehobene Schriftzug mit 3D Anmutung erkennbar.

### Beispiel 4 (Sol-Gel-Paste)

Es wurden 0,21 mol MPTES (Methacryloxypropyltriethoxysilan) und 0,05 mol TEOS (Tetraethoxysilan) mit Wasser versetzt und hydrolysiert. 50 g dieses Hydrolysates wurden mit einer Mischung aus 44 g einer alkoholischen Dispersion (30 Gew.-%) von kugelförmig geformten SiO2-Nanopartikeln mit einem Durchmesser von 40 - 50 nm in Isopropanol und 11 g einer alkoholischen Dispersion von kugelförmigen SiO2-Nanopartikeln mit einem Durchmesser von 10 - 15 nm gegeben. Zu dieser Lösung wurden 16 g Diethylenglycolmonoethylether gegeben und das leicht flüchtige Lösungsmittel bei 100 mbar und 50 °C Badtemperatur am Rotationsverdampfer entfernt.

Der Beschichtungslösung wurden anschließend 2,63 g Diethylenglykolmonoethylether, 0,42 g des radikalischen UV-Starters Irgacure 819, 0,04 g BYK 307 und 30 g ferromagnetisches Schwarzpigment Black 27 zugegeben. Die Lösung wurde 10 min gerührt.

Nach vollständiger Vermischung der Beschichtungslösung wurde mittels Siebdruck eine vollflächige Schicht auf ein Kalk-Natron-Glas aufgebracht. Mit einem stabfömigen Magneten (150 x 25 mm2) wurden von der unteren Glasseite die ferromagnetischen Partikel über dem Magneten ausgerichtet und die entstandene Struktur 2 min mittels eines UV-Strahlers gehärtet. Der Einbrand der Paste erfolgte gleichzeitig mit der Vorspannung des Substrates bei 710°C.

Die Schichtdicke betrug 3,2 µm, die eingebrannte Paste war schwarz und im Bereich, der mit dem Magneten behandelt wurde, war deutlich die stabförmige Struktur zu erkennen.

### Beispiel 5 (Vergleichsbeispiel)

Zur Herstellung einer schwarzen Paste mit einer Viskosität von 500 cP bei 140 U/min wurden 40 g einer aufgemahlenen Glasfritte (Glas N, Korngröße D90 < 4 µm) mit 10 g Schwarzpigment (Black 33) und mit 100 g kommerziell erhältlichen Siebdrucköls versetzt. Diese Paste wurde auf eine 4 mm dicke Scheibe aus Kalk-Natron-Glassscheibe mit der Größe 200 mm x 200 mm per Siebdruck vollflächig aufgetragen. Ein Elektromagnet, der die Form eines Quadrates von 50 mm x 50 mm hatte, wurde nun an die unbeschichtete Seite des Glases gehalten. Das Pigment richtete sich nicht entlang der magnetischen Felder aus. Anschließend wurde das beschichtete Substrat bei 200°C getrocknet und bei 650°C für 10 min eingebrannt.

Die Schichtdicke betrug 3,3 µm, die eingebrannte Paste war schwarz und im Bereich, der mit dem Magneten behandelt wurde, war keine Textur erkennbar.

### Beispiel 6 (Vergleichsbeispiel)

Zur Herstellung einer schwarzen Paste mit einer Viskosität von 500 cP bei 140 U/min wurden 40 g einer aufgemahlenen Glasfritte (Glas N, Korngröße D90 < 4 µm) mit 10 g Schwarzpigment (Black 27) und mit 200 g kommerziell erhältlichen Siebdrucköls versetzt. Diese Paste wurde auf eine 4 mm dicke Scheibe aus Borofloat® (Marke der Firma Schott AG, Mainz) mit der Größe 200 mm x 200 mm per Siebdruck vollflächig aufgetragen. Ein Elektromagnet, der die Form eines Quadrates von 50 mm x 50 mm hatte, wurde nun an die unbeschichtete Seite des Glases gehalten, und das Pigment richtete sich in diesem Bereich aus. Nach Entfernung des Magneten verloren die Kanten des Quadrates an Konturschärfe, die Texturierung zerfloss. Nach Entfernung des Magneten wurde das beschichtete Substrat bei 200°C getrocknet und bei 650°C für 10 min eingebrannt.

Die Schichtdicke betrug 2,7 µm, die eingebrannte Paste war schwarz und im Bereich, der mit dem Magneten behandelt wurde, war das Quadrat nicht mehr deutlich sichtbar.

## Patentansprüche

1. Verfahren zur Herstellung eines Substrates mit einer Beschichtung auf Glasbasis mit den folgenden Schritten:
- Bereitstellen eines Substrates;
- Herstellen einer Paste aus einer Glasfritte, der ferromagnetische Pigmente und ein Flussmittel beigemischt werden, derart, dass die Paste einen Feststoffanteil von 10-45 Gew.-%, bevorzugt von 15-35 Gew.-%, an ferromagnetischen Pigmenten aufweist, und derart, dass die Paste eine Viskosität im Bereich von 10 bis 1000 cP (0,01-1 Pa s) bei ber 140 min⁻¹ aufweist;
- Applizieren der Paste auf eine Oberfläche des Substrates;
- Ausrichten der Paste mittels eines Magnetfeldes und
- Einbrennen der Paste;
- wobei als ferromagnetische Pigmente eisenhaltige Pigmente zugesetzt werden, die ferner O, Mn, Cr, Co, Ni, Zn und/oder Ti aufweisen können.

2. Verfahren nach Anspruch 1, bei dem der Paste farbgebende Pigmente, Füllstoffe und/oder strukturgebende Partikel beigemischt werden.

3. Verfahren nach Anspruch 2, bei dem der Paste farbgebende Pigmente in Form von Metalloxiden zugesetzt werden, die aus der Gruppe ausgewählt werden, die aus Cobalt-Oxiden/-Spinellen, Cobalt-Aluminium-Spinellen, Cobalt-Aluminium-Zink-Oxiden, Cobalt-Aluminium-Silizium-Oxiden, Cobalt-Titan-Spinellen, Cobalt-Chrom-Spinellen, Cobalt-Aluminium-Chrom-Oxiden, Cobalt-Nickel-Mangan-Eisen-Chrom-Oxiden/-Spinellen, Cobalt-Nickel-Zink-Titan-Aluminium-Oxiden/-Spinellen, Chrom-Eisen-Nickel-Mangan-Oxiden/-Spinellen, Cobalt-Eisen-Chrom-Oxiden/- Spinellen, Nickel-Eisen-Chrom-Oxiden/-Spinellen, Eisen-Mangan-Oxiden/- Spinellen, Eisen-Oxiden, Eisen-Chrom-Oxiden, Eisen-Chrom-Zinn-Titan-Oxiden, Kupfer-Chrom-Spinellen, Nickel-Chrom-Antimon-Titan-Oxiden, Titan-Oxiden, Zirkon-Silizium-Eisen-Oxiden/-Spinellen und Mischungen davon besteht.

4. Verfahren nach einem der vorhergehenden Ansprüche, bei dem der Paste ferner Pigmente in Form von Absorptionspigmenten, insbesondere plättchen- oder stäbchenförmige Pigmenten, und/oder Effektpigmenten zugesetzt werden.

5. Verfahren nach einem der vorhergehenden Ansprüche, bei der Paste ferner Füllstoffe zugesetzt werden, die vorzugsweise aus der Gruppe ausgewählt werden, die aus SiOₓ-Partikeln, Aluminiumoxid-Partikeln, pyrogenen Kieselsäuren, Kalk-Natron-, Alkali-Alumosilikat- und Borosilikatglaskugeln, Glashohlkugeln, Polysiloxankugeln und/oder Mischungen davon besteht.

6. Verfahren nach einem der vorhergehenden Ansprüche, bei dem die Paste mit einer Glasfritte hergestellt wird, die aus der Gruppe ausgewählt wird, die aus alkalifreien und alkalihaltigen Gläsern, Silikatgläsern, Borosilikatgläsern, Zinksilikatgläsern, Zinkboratgläsern, Zinkborosilikatgläsern, Bismutborosilikatgläsern, Bismutboratgläsern, Bismutsilikatgläsern, Phosphatgläsern, Zinkphosphatgläsern, Aluminosilikatgläsern oder Lithium-Alumosilikatgläsern und Mischungen davon besteht.

7. Verfahren nach einem der vorhergehenden Ansprüche, bei dem der Feststoffanteil der Paste mit dem Flussmittel zu der Paste vermischt wird, die eine Viskosität im Bereich von 50 bis 800 cP (0,05-0,8 Pa s), bevorzugt im Bereich von 100 bis 600 cP (0,1-0,6 Pa s), bei 140 min⁻¹ aufweist.

8. Verfahren nach einem der vorhergehenden Ansprüche, bei dem die Paste nach ihrer Applizierung auf die Oberfläche des Substrates mittels des Magnetfeldes ausgerichtet und dann getrocknet wird, bevor das Einbrennen der Paste erfolgt.

9. Verfahren nach einem der Ansprüche der Ansprüche 1 bis 7, bei dem die Paste nach ihrer Applizierung auf die Oberfläche des Substrates mittels des Magnetfeldes ausgerichtet und gleichzeitig getrocknet wird, bevor das Einbrennen der Paste erfolgt.

10. Verfahren nach einem der Ansprüche 1 bis 7, bei dem die Paste mit UV-härtenden Zusätzen versehen wird, die während oder nach der Ausrichtung der Paste mittels des Magnetfeldes durch eine UV-Bestrahlung ausgehärtet werden.

11. Verfahren nach einem der vorhergehenden Ansprüche, bei dem ein Glaskeramiksubstrat verwendet wird, das im Grünglaszustand mit der Paste beschichtet wird und während des Einbrennens keramisiert wird.

12. Verfahren nach einem der Ansprüche 1 bis 10, bei dem ein Glaskeramiksubstrat verwendet wird, das im bereits keramisierten Zustand mit der Paste beschichtet wird.

13. Verfahren nach einem der vorhergehenden Ansprüche, bei dem das Substrat während des Einbrennens thermisch vorgespannt wird, um thermisch vorgespanntes Flachglas zu erzeugen, vorzugsweise bei Maximaltemperaturen zwischen 680 °C und 720 °C, gefolgt von aktiver Abkühlung.

## Claims

1. Method of producing a substrate with a glass-based coating comprising the following steps:
- providing a substrate;
- preparing a paste from a glass frit to which ferromagnetic pigments and a flux agent are admixed so that the paste has a solid proportion of 10-45 wt.-%, preferably of 15-35 wt.-% of ferromagnetic pigments, and so that the paste has a viscosity in the range of 10 to 1000 cP (0.01 - 1 Pas) at 140 rpm;
- applying the paste onto a surface of the substrate;
- aligning the paste by means of a magnetic field; and
- burning-in the paste;
- wherein as ferromagnetic pigments iron-containing pigments are added which may further comprise O, Mn, Cr, Co, Ni, Zn and/or Ti.

2. Method according to claim 1, wherein to the paste color-providing pigments, additives and/or structure-providing particles are admixed.

3. Method according to claim 2, wherein to the paste color-providing pigments configured as metal oxides are added which are selected from the group consisting of cobalt-oxides/spinels, cobalt-aluminum-spinels, cobalt-aluminum-zinc-oxides, cobalt-aluminum-silicon-oxides, cobalt-titanium-spinels, cobalt-chromium-spinels, cobalt-aluminum-chromium-oxides, cobalt-nickel-manganese-iron-chromium-oxides/spinels, cobalt-nickel-zinc-titanium-aluminum-oxides/spinels, chromium-iron-nickel-manganese-oxides/-spinels, cobalt-iron-chromium-oxides/spinels, nickel-iron-chromium-oxides/spinels, iron-manganese oxides/spinels, iron-oxides, iron-chromium-oxides, iron-chromium-tin-titanium-oxides, copper-chromium-spinels, nickel-chromium-antimony-titanium-oxides, titanium-oxides, zirconium-silicon-iron-oxides/spinels, and mixtures thereof.

4. Method according to any of the preceding claims, wherein to the paste in addition pigments configured as absorption pigments, in particular plate-shaped or pin-shaped pigments, and/or effect pigments are added.

5. Method according to any of the preceding claims, wherein to the paste in addition fillers are added which preferably are selected from the group consisting of SiO₂ particles, aluminum oxide particles, pyrogenic silicic acids, lime-soda-, alcaline-aluminosilicate- and boro-silicate glass spheres, hollow glass spheres, polysiloxane spheres, and/or mixtures thereof.

6. Method according to any of the preceding claims, wherein the paste is prepared with a glass frit which is selected from the group consisting of alkaline-free and alkaline-containing glasses, silicate glasses, borosilicate glasses, zinc-silicate glasses, zinc-borate glasses, zinc-borosilicate glasses, bismuth-borosilicate glasses, bismuth-borate glasses, bismuth-silicate glasses, phosphate glasses, zinc-phosphate glasses, aluminosilicate glasses, or lithium-alumino-silicate glasses, and mixtures thereof.

7. Method according to any of the preceding claims, wherein the solid proportion of the paste is mixed with the flux agent to a paste having a viscosity in the range of 50 to 800 cP (0.05 - 0.8 Pas), preferably in the range of 100 to 600 cP (0.1-0.6 Pas), at 140 rpm.

8. Method according to any of the preceding claims, wherein the paste, after application to the surface of the substrate, is aligned by means of a magnetic field and is dried thereafter, before the paste is burnt-in.

9. Method according to any of claims 1 to 7, wherein the paste, after application onto the surface of the substrate, is aligned by means of a magnetic field and is simultaneously dried, before the paste is burnt-in.

10. Method according to any of claims 1 to 7, wherein the paste is provided with UV-hardening additives which during or after the alignment of the paste by means of a magnetic field are hardened by means of UV-irradiation.

11. Method according to claim 16, wherein a glass ceramic substrate is used which in the green state is coated with the paste and during burning-in is ceramized.

12. Method according to any of claims 1 to 10, wherein a glass ceramic substrate is used which is coated with the paste in the already ceramized state.

13. Method according to any of the preceding claims, wherein the substrate during burning-in is thermally pre-stressed to yield a thermally pre-stressed flat glass, preferably at maximum temperatures between 680 °C and 720 °C, followed by active cooling.

## Revendications

1. Procédé de fabrication d'un substrat muni d'un revêtement à base de verre comprenant les étapes suivantes :
- la préparation d'un substrat ;
- la fabrication d'une pâte à partir d'une fritte de verre, à laquelle des pigments ferromagnétiques et un agent fondant sont incorporés, de telle sorte que la pâte présente une proportion de solides de 10 à 45 % en poids, de préférence de 15 à 35 % en poids, de pigments ferromagnétiques, et de telle sorte que la pâte présente une viscosité dans la plage allant de 10 à 1 000 cP (0,01 à 1 Pa s) à 140 min⁻¹ ;
- l'application de la pâte sur une surface du substrat ;
- l'orientation de la pâte au moyen d'un champ magnétique et
- la cuisson de la pâte ;
- en tant que pigments ferromagnétiques, des pigments contenant du fer étant ajoutés, qui peuvent en outre comprendre O, Mn, Cr, Co, Ni, Zn et/ou Ti.

2. Procédé selon la revendication 1, selon lequel des pigments colorants, des charges et/ou des particules structurantes sont incorporés dans la pâte.

3. Procédé selon la revendication 2, selon lequel des pigments colorants sous la forme d'oxydes métalliques sont ajoutés à la pâte, qui sont choisis dans le groupe qui est constitué par les oxydes/spinelles de cobalt, les spinelles de cobalt-aluminium, les oxydes de cobalt-aluminium-zinc, les oxydes de cobalt-aluminium-silicium, les spinelles de cobalt-titane, les spinelles de cobalt-chrome, les oxydes de cobalt-aluminium-chrome, les oxydes/spinelles de cobalt-nickel-manganèse-fer-chrome, les oxydes/spinelles de cobalt-nickel-zinc-titane-aluminium, les oxydes/spinelles de chrome-fer-nickel-manganèse, les oxydes/spinelles de cobalt-fer-chrome, les oxydes/spinelles de nickel-fer-chrome, les oxydes/spinelles de fer-manganèse, les oxydes de fer, les oxydes de fer-chrome, les oxydes de fer-chrome-étain-titane, les spinelles de cuivre-chrome, les oxydes de nickel-chrome-antimoine-titane, les oxydes de titane, les oxydes/spinelles de zirconium-silicium-fer et leurs mélanges.

4. Procédé selon l'une quelconque des revendications précédentes, selon lequel des pigments sous la forme de pigments d'absorption, notamment de pigments en forme de plaquettes ou de bâtonnets, et/ou de pigments à effet sont en outre ajoutés à la pâte.

5. Procédé selon l'une quelconque des revendications précédentes, selon lequel des charges sont en outre ajoutées à la pâte, qui sont de préférence choisies dans le groupe constitué par les particules de SiOₓ, les particules d'oxyde d'aluminium, les silices pyrogénées, les billes de verre sodocalcique, d'alumosilicate alcalin et de borosilicate, les billes creuses de verre, les billes de polysiloxane et/ou leurs mélanges.

6. Procédé selon l'une quelconque des revendications précédentes, selon lequel la pâte est fabriquée avec une fritte de verre, qui est choisie dans le groupe constitué par les verres sans alcalis et contenant des alcalis, les verres de silicate, les verres de borosilicate, les verres de silicate de zinc, les verres de borate de zinc, les verres de borosilicate de zinc, les verres de borosilicate de bismuth, les verres de borate de bismuth, les verres de silicate de bismuth, les verres de phosphate, les verres de phosphate de zinc, les verres d'aluminosilicate ou les verres d'alumosilicate de lithium et leurs mélanges.

7. Procédé selon l'une quelconque des revendications précédentes, selon lequel la proportion de solides de la pâte est mélangée avec l'agent fondant pour former la pâte qui présente une viscosité dans la plage allant de 50 à 800 cP (0,05 à 0,8 Pa s), de préférence dans la plage allant de 100 à 600 cP (0,1 à 0,6 Pa s), à 140 min⁻¹.

8. Procédé selon l'une quelconque des revendications précédentes, selon lequel, après son application sur la surface du substrat, la pâte est orientée au moyen du champ magnétique, puis séchée, avant que la cuisson de la pâte ait lieu.

9. Procédé selon l'une quelconque des revendications 1 à 7, selon lequel, après son application sur la surface du substrat, la pâte est orientée au moyen du champ magnétique et simultanément séchée, avant que la cuisson de la pâte ait lieu.

10. Procédé selon l'une quelconque des revendications 1 à 7, selon lequel la pâte est munie d'additifs durcissant par UV, qui sont durcis par un rayonnement UV pendant ou après l'orientation de la pâte au moyen du champ magnétique.

11. Procédé selon l'une quelconque des revendications précédentes, selon lequel un substrat en vitrocéramique est utilisé, qui est revêtu avec la pâte à l'état de verre vert et céramisé pendant la cuisson.

12. Procédé selon l'une quelconque des revendications 1 à 10, selon lequel un substrat en vitrocéramique est utilisé, qui est revêtu avec la pâte à l'état déjà céramisé.

13. Procédé selon l'une quelconque des revendications précédentes, selon lequel le substrat est trempé thermiquement pendant la cuisson, afin de générer un verre plat trempé thermiquement, de préférence à des températures maximales comprises entre 680 °C et 720 °C, suivies par un refroidissement actif.
